Europäisches Patentamt

European Patent Office

Office européen des brevets

(19)

(11) Publication number: **0 239 947 B1**

## EUROPEAN PATENT SPECIFICATION

(45) Date of publication of patent specification: **04.03.92**  (51) Int. Cl.⁵: **G11B 5/008**, G11B 5/53

(21) Application number: **87104565.4**

(22) Date of filing: **27.03.87**

(54) **Helical scan magnetic tape recording and reproducing apparatus.**

(30) Priority: **31.03.86 US 846398**

(43) Date of publication of application:
**07.10.87 Bulletin 87/41**

(45) Publication of the grant of the patent:
**04.03.92 Bulletin 92/10**

(84) Designated Contracting States:
**DE FR GB IT NL**

(56) References cited:
**FR-A- 2 276 653**
**US-A- 3 375 331**
**US-A- 3 567 869**
**US-A- 4 167 023**
**US-A- 4 366 519**

(73) Proprietor: **HONEYWELL INC.**
**Honeywell Plaza**
**Minneapolis MN 55408(US)**

(72) Inventor: **Ballinger, Dale O.**
**1690 Lewis Street**
**Lakewood Colorado 80215(US)**

(74) Representative: **Altenburg, Udo, Dipl.-Phys. et al**
**Patent- und Rechtsanwälte Bardehle-Pagenberg-Dost-Altenburg Frohwitter-Geissler & Partner Postfach 86 06 20**
**W-8000 München 86(DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention relates to a helical scan recording and reproducing apparatus utilizing rotating magnetic heads.

The use of rotating magnetic heads in helical scan recording and reproducing systems for magnetic tape are well-known in the art, as shown in US-A 3,359,365 to produce a helical scan of a recording surface of a magnetic tape. Such magnetic tape devices are used extensively in video tape recorders for recording the high frequency of television signals. At normal rotor speed, a video tape recorder with two heads is limited to about an ll MHz recording rate based on the limitation of 50,000 bits per lineal inch packing density. This can be improved by increasing the speed of the rotor. It can also be improved by increasing the number of heads, e.g., eight heads equally spaced around a rotating support drum operating at 30 rps quadruples the data rate which can also be achieved by two heads operating at l20 rps. In each case the relative tape speed is quadrupled. The major difference between those two schemes is that, for the eight head arrangement, four rotary transformers are now required plus flying head switching and eight heads instead of two. Such video tape recorders have been produced to utilize four rotary transformers and eight heads with integrated switching circuitry. However, when such tape recorders have additional limitations of a variable tape speed and the need for a l00% spacial packing density, the conventional helical scan tape recorder is not capable of producing proper operation between the recording and playback operations. In other words, in order to faithfully reproduce the video recorded tracks the tape speed in such conventional recorders during recording and playback must be the same. If a playback tape speed is used which is different from the recording speed, e.g., zero tape speed for still frame playback, mistracking by the rotating tape heads results in noise in the output signal. Thus, the conventional tape recorder will not track the theoretically correct scan angle regardless of tape speed and, if started exactly on track at the beginning of a scan, would be completely off track at the end of each tape traverse in the worst case of full speed recording and stopped tape playback. In this case, the packing density of the system would suffer inasmuch as the full tape scan would not be utilized. Accordingly, in order to provide an improved helical scan tape recorder, it is desirable to maintain a correct helical scan of the recording tracks regardless of tape speed.

FR-A 22 76 653 describes a helical scan magnetic tape recording and reproducing apparatus according to the preamble of claim 1. A disk-shaped support for the magnetic heads is rotatable by means of two roller bearings around a sleeve surrounding a central shaft for the tape supporting drums. The sleeve has a larger diameter than the outer diameter of said shaft and is provided at its internal side at the level of the magnetic heads with an inwardly projecting collar which engages the cylindrical surface of said shaft. The upper end of the sleeve is provided with a flange carrying a pin which projects through a hole in the upper drum to the outside of the tape support drums. By tilting said pin the sleeve can be tilted around said collar and therewith the plane of rotation of the head support can be tilted in relation to said shaft and to the tape support surface of said drums. The head support disk is driven by a belt surrounding a cylindrical extension of said head supporting disk.

The specification of FR-A 22 76 653 mentions that one or both of the head tape supporting drums could be rotatable, but only shows an example with fixed drums and does not give any hint how the sleeve could be tilted by said pin and how the head supporting disk could be rotated by said belt if one or both drums were rotating.

It is an object of the present invention to provide an improved helical scan tape recorder. This is achieved by the invention as characterized in claim 1. It relates to a helical scan magnetic tape recording and reproduction apparatus having a drive means, a tape support means including a drum arranged to be rotatably driven by the drive means, a plurality of magnetic heads, and head support means for carrying the heads and rotatably driven together with the tape support means . The invention provides pivotable means for connecting the head support means to the drive means to produce a rotation of the head support means concurrently with the drum while allowing a tilting of the plane of rotation of the heads with respect to an outside surface of the drum. Further details and modifications are described in the subclaims. Preferably the rotating heads are mounted on a separate ring having a pivotable connection with a motor drive shaft whereby the rotating heads are pivotable independently of the rotating drum to provide a variable angle between the plane of rotation of the magnetic heads and the surface of the magnetic tape. This variable angle changes the angle of the helical scan path on the magnetic tape and is preset for a particular tape speed to produce a maximum packing density of the recorded information by utilizing an entire tape scan path.

A better understanding of the present invention may be had when the following detailed description is read in connection with the accompanying drawings, in which:

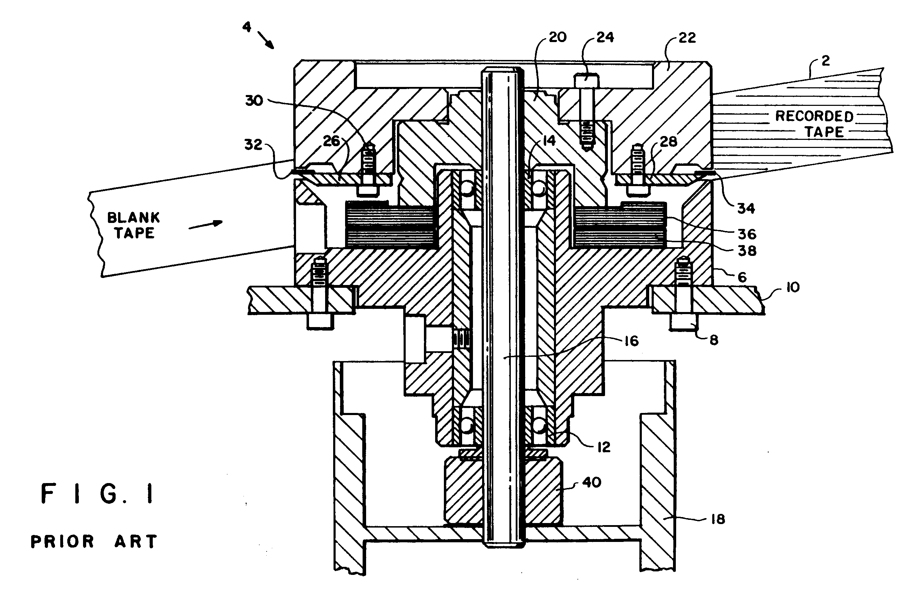

Fig. 1 is a cross-sectional illustration of a conventional helical scan recording and reproducing apparatus,

Fig. 2 is a pictorial illustration of a magnetic tape record produced by the helical scan apparatus shown in Fig. I,

Figs 3A and 3B are pictorial illustrations of the principle of operation of a helical scan recorder utilizing an example of the present invention and Fig. 4 is a cross-sectional illustration of a helical scan recording and reproducing apparatus embodying an example of the present invention.

Referring to Fig. I in more detail, there is shown a conventional helical scan recording and reproducing apparatus cooperating with a magnetic tape 2 which is partially wrapped, i.e., at least I80°, on the helical scan apparatus. The helical scan apparatus 4 includes a stationary drum portion 6 attached by suitable screws 8 to a frame I0 for mounting the helical scan apparatus. The stationary drum 6 has a pair of coaxial bearings I2,I4 located therein and arranged to encircle spaced locations on a motor shaft I6. The motor shaft I6 is connected to a motor drive, shown in diagramatic form by a partial illustration of an outer motor shell I8. A collar 20 is coaxially attached to the end of the motor shaft I6. An upper drum 22 is coaxially attached by screws 24 to the collar 20 and rotates therewith. A pair of magnetic head carrying shoes 26, 28 are attached to the drum 22 by respective screws, e.g., screw 30. The shoes 26,28 carry at respective ends corresponding ones of a pair of magnetic heads 32,34, e.g., shoe 26 carries head 32 and shoe 28 carries head 34. Thus, the shoes 26,28 and the heads 32,34 rotate with the drum 22. The heads 32,34 are arranged to project beyond the outer diameter of the upper drum 22 and the lower or stationary drum 6. The upper drum 22 and the stationary drum 6 have the same diameter which allows the projection of the heads 32,34 to maintain intimate contact with the recording tape 2 which is wrapped at least I80° on the assembly of the upper and lower drums 6,22. A moving half 36 of a rotary transformer is also attached to the collar 20 while a stationary half 38 of the rotary transformer is attached to the stationary drum 36. The rotary transformer serves to provide a signal path to the magnetic heads 32,34. A collar 40 is provided on the motor shaft I6 to support the rotating elements and is attached to the motor shaft I6 by a suitable means (not shown).

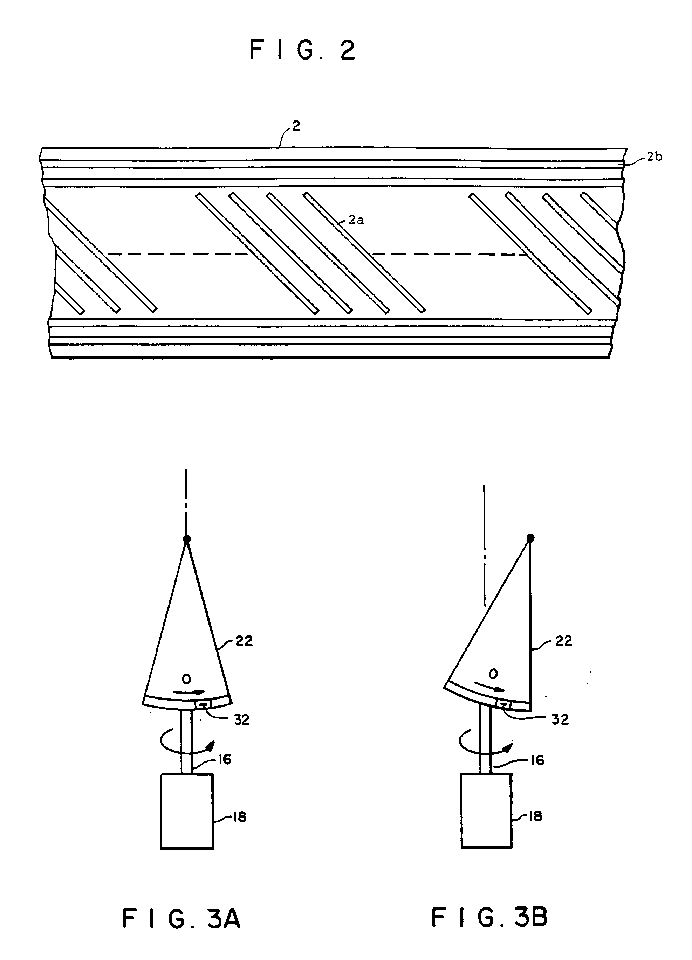

An inherent problem with such a prior art recorder is that if the tape speed between recording and playback is different, the helical scan angle of the tape 2 whould be incorrect. For example, if during playback the tape 2 is stopped, the helical scan angle would not be the same as that during recording of a moving tape 2. A typical recording track 2a on the tape 2 is illustrated in Fig. 2 along with a typical audio, control or timing track 2b. If a magnetic head is started exactly on a recording track, it would be completely off the track at the end of each traverse of the tape 2 in the worst case, i.e., full speed recording and stopped tape playback.

In order to enable the heads to exactly track the recorded angle regardless of tape speed, the present invention is directed to a mechanism for tilting the angle of rotation of the moving heads to enable the heads to exactly track the recorded angle, i.e., the head path altered to account for the tape motion difference between the recording and reproduction process if a difference in tape speed is to be encountered. This tilting of the cone of rotation of the magnetic heads is illustrated in Figs. 3A and 3B with the center of the cone of rotation being shown in 3B and in a displaced state with respect to the axis of rotation of the motor shaft I6.

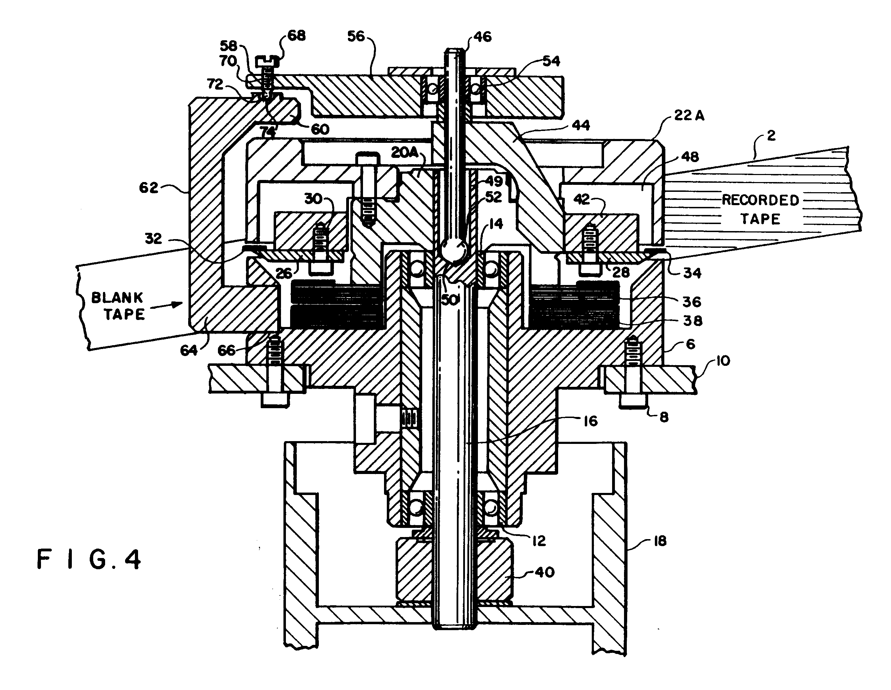

In Fig. 4, there is shown a cross-sectional illustration of a helical scan recording and reproducing apparatus enbodying an example of the present invention. Similar reference numbers have been used in Figs. I and 4 to indicate common elements therein. In the apparatus shown in Fig. 4, the magnetic heads 32,34 and the shoes 26,28 supporting the magnetic heads 32,34 are removed from the rotating drum 22A and are attached to a ring 42 by respective screws, e.g., screw 30. The ring 42, in turn, is attached by a plurality of webs 44 to a secondary shaft 46. The upper drum 22A is provided with a suitably shaped recess 48 to accommodate the ring 42 and the webs 44. Concurrently, the collar 20A is also provided with a recessed outer surface to accommodate the ring 42 and webs 44 whereby the ring 42 and the webs 44 are maintained free of contact from the drum 22A and the collar 20A. An outer end of the shaft I6 is provided with a longitudinal coaxial recess 49 having a tapered inner end 50. The secondary shaft 46 is located within the recess 48 and is provided with a rounded end 52 which is arranged to rest on the tapered end surface 50 of the recess 48.

The contact between the surface 50 and the end 52 allows the secondary shaft 46 to rotate with the motor output shaft I6 while permitting a pivoting of the shaft 46 on the tapered surface 50. This pivoting of the shaft 46 is effective, in turn, to pivot the webs 44, the ring 42, the shoes 26,28 and the magnetic heads 32,34. The pivot plane of the shaft 46 is arranged to substantially coincide with the same plane of the magnetic heads 32,34 whereby the secondary shaft 46 can be tilted on the pivot plane without substantially altering the projection of the heads 32,34 beyond the rotating drum 22A. Any other pivot point would result in an increased change in head projection beyond the upper drum 22A and the lower drum 6, i.e., the change in head projection is proportional to the deviation of the pivot plane from the plane of the magnetic heads 32,34. Accordingly, it is important that the head projection remains substantially constant since it determines the head-to-tape contact pressure and, thus, the signal-to-noise ratio of the resultant output signal from the magnetic heads 32,34.

If the secondary shaft 46 is arranged to be coaxial with the motor output shaft l6, the assembly shown in Fig. 4 can produce a magnetic head rotation which in most respects is similar to the operation of the apparatus shown in Fig. I. However, as discussed above, the apparatus shown in Fig. 4 is able to additionally tilt the axis of the cone of rotation of the magnetic heads 32,34 and in order to select a tilt angle, the apparatus is provided with an adjustable support for the outer end of secondary shaft 46. Specifically, the outer end of the secondary shaft 46 is supported in a bearing 54 in a pivot plate 56. The pivot plate 56 is provided with an extension 58 which overlaps a first orthogonal projection 60 of a support arm 62. The support arm 62, in turn, is attached by a second orthogonal projection 64 to a recess 66 located on an outside surface of the drum 6. An adjusting screw 68 is threaded through a threaded hole 70 in the extension 58 of the support 56. The screw 68 is provided with a rounded end 72 which is arranged to bear against an inner surface of a recess 74 in the first projection 60. Thus, an adjustment of the screw 68 in the extension 58 is effective to change the separation between extension 58 and the projection 60. This change, in turn, tilts the end of the secondary shaft 46 and the attached magnetic heads 32,34 to produce a change in the helical scan angle on the tape 2. This helical scan angle can, accordingly, be altered to exactly track at a theoretically correct scan angle for any tape speed. Accordingly, the assembly shown in Fig. 4 is capable of tracking a predetermined scan angle regardless of the tape speed at the time of recording or the speed of playback from zero tape speed to full tape speed.

## Claims

1. A helical scan magnetic tape recording and reproducing apparatus comprising:
   a) tape support means (6, 22A) including a fixed drum (6) and adjacent thereto and coaxial therewith a rotatable drum (22A) arranged to be rotatably driven by drive means (16);
   b) a plurality of magnetic heads (32, 34) carried by rotatably driven head support means (26, 28, 42, 44);
   c) pivotable means (46, 52, 50, 56) allowing a tilting of the plane of rotation of said head support means (26, 28, 42, 44) with respect to an outside surface of said tape support means (6, 22A);
   **characterized in that**
   d) said drive means (16, 18) includes a drive motor (18) having a motor output shaft (16) passing through said fixed drum (6) and attached to said rotatable drum (22A);
   e) said output shaft (16) includes a recess (49) extending coaxially into said shaft from an outer end of said shaft adjacent to said rotatable drum (22A);
   f) said recess (49) terminates internally in a conical surface (50);
   g) said pivotable means (46, 52, 50, 56) includes a support rod (46) having a spherical end (52) resting on said conical surface (50) to provide a motion transfer therebetween.

2. An apparatus according to claim 1, **characterized in that** said pivotable means (46, 52, 50, 56) includes adjustment means (68, 70, 72, 74) for maintaining a preselected tilt angle of said plane of rotation of said heads (32, 34).

3. An apparatus according to claim 1 or 2, **characterized in that** said plane of rotation of said heads (32, 34) is coplanar with the pivot plane (through 52) of said pivotable means (46, 52, 50, 56).

4. An apparatus according to one of the preceding claims, **characterized in that** said head support means (26, 28) is located within said tape support drum (22A) while allowing said heads (32, 34) to project beyond the outside surface of said drum.

5. An apparatus according to one of the claims 2 to 4, **characterized in that** said adjustment means (68, 70, 72, 74) includes means (54, 56) for guiding an outer end of said support rod (46) while allowing a rotation of said rod.

6. An apparatus according to claim 5, **characterized in that** said means (54, 56) for guiding includes a support plate (56), a bearing (54) mounted on one end of said plate and encircling said rod (46) and an adjustable screw (68) mounted on a second end (58) of said plate (56) for providing a variable spacing of the second end (58) from said tape support means (6, 22A).

7. An apparatus according to claim 6, **characterized in that** said adjustable screw (68) engages a stationary support arm (62) forming an abutment for the tiltable support plate (56).

## Revendications

1. Un appareil d'enregistrement et de reproduction à bande magnétique à balayage en hélice comprenant:

   a) un moyen (6, 22A) de support de bande comprenant un tambour fixe (6) et un tambour rotatif (22A), adjacent à celui-ci et coaxial avec lui, agencé pour être entraîné en rotation par un moyen d'entraînement (16);

   b) plusieurs têtes magnétiques (32, 34) portées par un moyen de support de tête entraîné en rotation (26, 28, 42, 44);

   c) un moyen pivotant (46, 52, 50, 56) permettant de basculer le plan de rotation dudit moyen de support de tête (26, 28, 42, 44) par rapport à une surface extérieure dudit moyen (6, 22A) de support de ruban;

   **caractérisé en ce que**

   d) ledit moyen d'entraînement (16, 18) comprend un moteur d'entraînement (18) comportant un arbre (16) de sortie de moteur traversant ledit tambour fixe (6) et monté sur ledit tambour rotatif (22A);

   e) ledit arbre de sortie (16) comprend un évidement (49) s'étendant coaxialement dans ledit arbre à partir d'une extrémité extérieure dudit arbre adjacente audit tambour rotatif (22A);

   f) ledit évidement (49) se termine intérieurement en une surface conique (50);

   g) ledit moyen pivotant (46, 52, 50, 56) comprend une tige de support (46) comportant une extrémité sphérique (52) reposant sur ladite surface conique (50) pour effectuer un transfert de mouvement entre eux.

2. Un appareil selon la revendication 1, **caractérisé en ce que** ledit moyen pivotant (46, 52, 50 ,56) comprend un moyen d'ajustement (68, 70, 72, 74) pour maintenir un angle d'inclinaison choisi au préalable dudit plan de rotation desdites têtes (32, 34).

3. Un appareil selon la revendication 1 ou 2, **caractérisée en ce que** ledit plan de rotation desdites têtes (32, 34) est coplanaire avec le plan de pivotement (passant par 52) dudit moyen pivotant (46, 52, 50 ,56).

4. Un appareil selon l'une quelconque des revendications précédentes, **caractérisée en ce que** ledit moyen (26, 28) de support de tête est situé à l'intérieur dudit tambour (22A) de support de bande tout en permettant auxdites têtes (32, 34) de faire saillie au-delà de la surface extérieure dudit tambour,

5. Un appareil selon l'une des revendications 2 à 4 **caractérisée en ce que** ledit moyen d'ajustement (68, 70, 72, 74) comprend un moyen (54, 56) pour guider une extrémité extérieure de ladite tige de support (46) tout en permettant une rotation de ladite tige.

6. Un appareil selon la revendication 5, **caractérisée en ce que** ledit moyen (54, 56) de guidage comprend une plaque de support (56), un palier (54) monté sur une extrémité de ladite plaque et encerclant ladite tige (46) et une vis réglable (68) montée sur une deuxième extrémité (58) de ladite plaque (56) pour définir un espacement variable entre la deuxième extrémité (58) et ledit moyen de support de bande (6, 22A).

7. Un appareil selon la revendication 6, **caractérisée en ce que** ladite vis réglable (68) vient en contact avec un bras de support fixe (62) formant une butée pour la plaque de support inclinable (56).

## Patentansprüche

1. Helicalscan-Magnetband-Aufzeichnungs- und Wiedergabegerät, das aufweist:

   a) eine Bandhalteeinrichtung (6, 22A), die eine feste Trommel (6) und benachbart und koaxial dazu eine drehbare Trommel (22A) enthält, die angeordnet ist, um durch eine Antriebseinrichtung (16) drehbar angetrieben zu werden;

   b) eine Vielzahl von Magnetköpfen (32, 34), die durch eine drehbar angetriebene Kopfhalteeinrichtung (26, 28, 42, 44) getragen wird;

   c) eine Schwenkeinrichtung (46, 52, 50, 56), die ein Neigen der Rotationsebene der Kopfhalteeinrichtung (26, 28, 42, 44) in bezug auf eine äußere Oberfläche der Bandhalteeinrichtung (6, 22A) zuläßt;

   **dadurch gekennzeichnet, daß**

   d) die Antriebseinrichtung (16, 18) einen Antriebsmotor (18) enthält, der eine Motorausgabewelle (16) aufweist, die durch die feste Trommel (6) verläuft und an der drehbaren Trommel (22A) angebracht ist;

   e) die Ausgabewelle (16) eine Aussparung (49) enthält, die sich koaxial in die Welle erstreckt, und zwar von einem äußeren Ende der Welle, benachbart zu der drehbaren Trommel (22A);

   f) die Aussparung (49) intern in einer konischen Oberfläche (50) endet;

   g) die Schwenkeinrichtung (46, 52, 50, 56) einen Haltestab (46) enthält, der ein sphärisches Ende (52) hat, das auf der konischen Oberfläche (50) ruht, um eine Bewegungsübertragung dazwischen zu erzeugen.

2. Gerät nach Anspruch 1, dadurch gekennzeichnet, daß die Schwenkeinrichtung (46, 52, 50, 56) eine Einstelleinrichtung (68, 70, 72, 74) zum Beibehalten eines vorgewählten Neigungswinkel der Ebene der Drehung der Köpfe (32, 34) enthält.

3. Gerät nach Anspruch 1 oder 2, dadurch gekennzeichnet, daß die Ebenen der Drehung der Köpfe (32, 34) koplanar zu der Schwenkebene (durch 52) der Schwenkeinrichtung (46, 52, 50, 56) ist.

4. Gerät nach einem der vorangehenden Ansprüche, dadurch gekennzeichnet, daß die Kopfhalteeinrichtung (26, 28) in der Bandhaltetrommel (22A) angeordnet ist, während sie die Köpfe (32, 34) über die äußeren Oberflächen der Trommel vorstehen läßt.

5. Gerät nach einem der Ansprüche 2 bis 4, dadurch gekennzeichnet, daß die Einstelleinrichtung (68, 70, 72, 74) eine Einrichtung (54, 56) zum Führen eines äußeren Endes des Haltestabs (46) enthält, während sie eine Drehung des Stabes zuläßt.

6. Gerät nach Anspruch 5, dadurch gekennzeichnet, daß die Einrichtung (54, 56) zum Führen eine Halteplatte (56), einen Träger (54), der an einem Ende der Platte montiert ist und den Stab (46) kreisförmig umgibt, und eine einstellbare Schraube (68), die an einem zweiten Ende (58) der Platte (56) zum Erzeugen eines variablen Raums des zweiten Endes (58) von der Bandhalteeinrichtung (6, 22A) montiert ist, enthält.

7. Gerät nach Anspruch 6, dadurch gekennzeichnet, daß die einstellbare Schraube (68) mit einem stationären Haltearm (62) in Eingriff steht, der ein Widerlager für die neigbare Halteplatte (56) bildet.

FIG. 1
PRIOR ART

EP 0 239 947 B1

## F I G. 2

## F I G. 3A

## F I G. 3B

F I G. 4